# EUROPEAN PATENT SPECIFICATION

(11) **EP 1 677 480 B1**
(45) Date of publication and mention of the grant of the patent: **24.02.2010**
(21) Application number: 05026871.3
(22) Date of filing: 08.12.2005
(51) Int. Cl.: H04L 29/06, H04L 29/08, H04W 76/02, H04L 12/56

(54) **Method for setting and releasing a packet data protocol context of mobile communication terminal**
Verfahren zum Setzen und Freigeben eines Datenprotokollkontextes von einem mobilen Terminal
Procédé d'établissement et de libération d'un contexte de protocole de données par paquets d'un terminal de communication mobile

(30) Priority: 30.12.2004 KR 2004117375
(43) Date of publication of application: 05.07.2006
(73) Proprietor: LG Electronics Inc., Seoul 150-721 (KR)
(72) Inventor: Lee, Sung-Kyu, Danwon-Gu, Ansan Gyeonggi-Do (KR)
(74) Representative: Katérle, Axel

(56) References cited:
- WO-A-01/97483
- WO-A-02/41592
- MISHRA A ED - INSTITUTE OF ELECTRICAL AND ELECTRONICS ENGINEERS: "Performance Characterization of Signaling Traffic in UMTS Core Networks" GLOBECOM'03. 2003 - IEEE GLOBAL TELECOMMUNICATIONS CONFERENCE. CONFERENCE PROCEEDINGS. SAN FRANCISCO, DEC. 1 - 5, 2003, IEEE GLOBAL TELECOMMUNICATIONS CONFERENCE, NEW YORK, NY : IEEE, US, vol. VOL. 7 OF 7, 1 December 2003 (2003-12-01), pages 1141-1146, XP010678499 ISBN: 0-7803-7974-8

## Description

### BACKGROUND OF THE INVENTION

### 1. Field of the Invention

The present invention relates to a mobile communication terminal and, more particularly, to a method for effectively setting (creating) and releasing a packet data protocol (PDP) context of a mobile terminal.

### 2. Description of the Related Art

In general, a mobile communication system allows a user to wirelessly page another party and be wirelessly connected for performing communications any time and anywhere through controlling of switching by a mobile switching center (MSC) while traveling in a service area managed by a base station (BS).

Recently, mobile communication terminals are available for multimedia communications including image signals as well as data communications including symbols, numbers and characters. The mobile communication techniques are being developed quickly to go beyond communications allowing transmission and reception of only audible data, and in particular, a concept of GPRS (General Packet Radio Service) has been proposed to extend a data network to a wireless communications network.

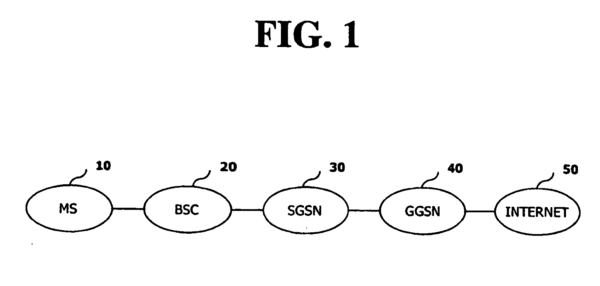

The GPRS allows addition of non-sound (e.g., video) information to information transmitted and received through a wireless communication system, interconnecting the GPRS network and the existing Internet network, so mobile communication terminals can use services such as an FTP (File Transfer Protocol), a Web browsing, a Teinet which are widely used in fixed line (landline) Internet network communications. A conceptual structure of the general GPRS network will now be described with reference to FIG. 1.

FIG. 1 illustrates a conceptual structure of the general GPRS network. As shown in FIG. 1, the general GPRS network includes: an SGSN (Serving GPRS Support Node) 30 for transmitting data packets to a mobile communication terminal 10 located within a service area through a BSC (Base Station Controller) 20; and a GGSN (Gateway GPRS Support Node) 40 for handling a logical interface between the SGSN 30 and the Internet 50, an external packet data network, and managing routing information.

A method for setting or releasing a PDP context of the mobile communication terminal in the thusly constructed general GPRS network will be described briefly as follows.

First, the mobile communication terminal 10 transmits a message for requesting an activation PDP context to the SGSN 30 and checks whether a message for authenticating the activation PDP context is received within a predetermined response time (which is typically 30 seconds) from the SGSN 30.

The mobile communication terminal 10 checks whether a message for authenticating the activation PDP context is received within the predetermined response time, and if the predetermined response time lapses without receipt, the mobile communication terminal re-transmits a message for requesting the activation PDP context. In this case, the mobile communication terminal 10 can re-transmit the message for requesting the activation PDP context up to a maximum of five times.

When the mobile communication terminal receives a message for authenticating the activation PDP context as a response message to the message for requesting the activation PDP context for setting the PDP context within the predetermined response time, it sets the PDP context in the SGSN 30. If the mobile communication terminal fails to receive the message for authenticating the activation PDP context within the predetermined response time, it can re-transmit the message for requesting the activation PDP context to the SGSN 30 within the maximum 5 attempts.

Meanwhile, in order to release the set PDP context, the mobile communication terminal 10 transmits a message for requesting de-activation PDP context to the SGSN 30 and then receives a message for authenticating the deactivation PDP context from the SGSN 30 within a predetermined response time, which is typically 30 seconds, in the same manner as that of the method for setting the PDP context.

However, the related art method for setting and releasing the PDP context of the mobile communication terminal is disadvantageous in that when the message for authenticating the PDP context is not received within the predetermined response time, the message for requesting the PDP context must be re-transmitted within the predetermined number of times of transmissions (i.e., five re-transmissions), which may require a maximum total duration of 2 minutes and 30 seconds (i.e., 30 second for each of the five total attempts) when the PDP context is not set or released. That is, the related art method is not effective because so much time is required for waiting to receive PDP context setting or release.

WO 01/97483 A2 is concerned with the dynamic allocation of an IP address to a mobile terminal operating in a GPRS network. A Gateway GPRS Service Node (GGSN) transmits a radius access request message to a radius server of an Internet service provider in response to receipt of a request message from a Serving GPRS Support Node (SGSN) requesting the creation of a PDP context. The GGSN waits as much as a predetermined waiting duration for a response from the radius server and retransmits its access request if the waiting duration lapses without success. The GGSN is adapted to repeat the radius access request message for a predetermined number of times, always using the same predetermined waiting duration. Based on collected time duration statistics for different Internet service providers or access point names, the GGSN can adjust the predetermined waiting duration.

### SUMMARY OF THE INVENTION

It is an object of the present invention to provide a time-efficient method for setting and releasing a PDP (Packet Data Protocol) context of a mobile communication terminal in a GPRS network.

To achieve the above object, the present invention provides a method for setting a PDP context in accordance with claim 1 and further provides a method for releasing a PDP context in accordance with claim 11. Preferred embodiments are given in the dependent sub-claims. The present invention achieves to control a predetermined response time with respect to a message for requesting activation or deactivation of a PDP context according to the number of re-transmissions of the request message.

### BRIEF DESCRIPTION OF THE DRAWINGS

The invention will be described in detail with reference to the following drawings wherein:
FIG. 1 shows a conceptual structure of a general GPRS network;
FIG. 2 is a flow chart illustrating the processes of an exemplary method for setting a PDP context of a mobile communication terminal in accordance with the present invention; and
FIG. 3 is a flow chart illustrating the processes of an exemplary method for releasing a PDP context of a mobile communication terminal in accordance with the present invention.

### DETAILED DESCRIPTION OF THE INVENTION

A method for effectively setting and releasing a packet data protocol (PDP) context of a mobile communication terminal by controlling a predetermined response time with respect to a message for requesting a PDP context activation/deactivation according to the number of re-transmissions of the PDP context requesting message, in accordance with preferred embodiments of the present invention will now be described with reference to the accompanying drawings.

The present inventors recognized that a non-flexible (fixed) time period (typically 5 seconds) for waiting to receive authentication for activating (or deactivating) PDP context is unnecessary and disadvantageous in certain situations. Thus, the inventors have developed a certain technique that flexibly assigns an appropriate time period for one or more transmissions of the PDP context, whereby each n-th transmission may have an independent duration (i.e., time period for waiting) depending upon the conditions of the communication environment and/or due to other factors.

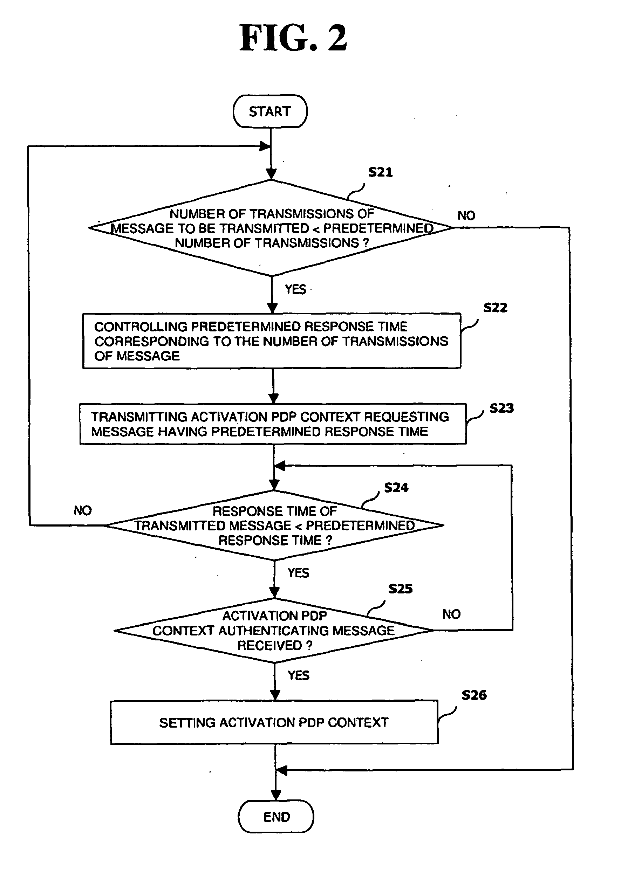

FIG. 2 is a flow chart illustrating the processes of an exemplary method for setting a PDP context of a mobile communication terminal in accordance with the present invention.

As shown in FIG. 2, the method for setting a PDP context of a mobile communication terminal (e.g., handset, mobile phone, wireless communications device, etc.) includes: checking whether the number of transmissions of a message for requesting an activation PDP context is smaller than the predetermined number of transmissions (step S21); controlling a predetermined response time according to the checked number of transmissions (step S22); transmitting a message for requesting an activation PDP context having the controlled predetermined response time (step S23); determining whether the response time of the transmitted message is within the controlled predetermined response time (step S24); checking whether a message for authenticating the activation PDP context has been received when the response time of the transmitted message is within the predetermined response time (step S25); and setting the activation PDP context when the message for authenticating the activation PDP context has been received.

The method for setting the PDP context of the mobile communication terminal will now be described in detail.

First, the mobile communication terminal 10 checks whether the number of transmissions of the activation PDP context requesting message is within the predetermined number of transmissions (step S21). When the number of transmissions of the activation PDP context is within the predetermined number of times, the mobile communication terminal controls the predetermined response time according to the number of transmission of the activation PDP context requesting message, and when the number of transmissions of the activation PDP context requesting message exceeds the predetermined number of times, the mobile communication terminal terminates the transmission of the activation PDP context request. Herein, the response time refers to a duration from a time point at which the activation PDP context requesting message is transmitted up to a time point at which the activation PDP context authenticating message is received.

The mobile communication terminal 10 controls the predetermined response time according to the number of transmissions of the activation PDP context requesting message (step S22). Namely, by determining the predetermined response time corresponding to the number of transmissions of the activation PDP context requesting message, the mobile communication terminal 10 controls the predetermined response time according to the number of transmissions of the activation PDP context requesting message.

For example, when the mobile communication terminal 10 determines the maximum number of transmissions of the activation PDP context requesting message as being five times, it can determine a response time of a first message for requesting the activation PDP context as 30 seconds like in the related art, a response time of a second message for re-requesting the activation PDP context as 20 seconds, a response time of a third message as 10 seconds, a response time of a fourth message as 5 seconds, and a response time of a fifth message as five seconds. That is, the mobile communication terminal 10 can control the particular response time of each message for requesting the re-transmitted activation PDP context to be different according to the number of transmissions of the activation PDP context requesting message.

Having the controlled predetermined response time, the mobile communication terminal 10 transmits the activation PDP context requesting message to the SGSN 30 and then counts a response time of the transmitted activation PDP context requesting message through a counter (step S23). Namely, whenever the mobile communication terminal transmits the activation PDP context requesting message, it initializes and drives the counter to count the response time of the activation PDP context requesting message each time.

By doing that, the mobile communication terminal 10 can determine whether the activation PDP context authenticating message as a response message with respect to the transmitted activation PDP context requesting message has been received within the predetermined response time.

The mobile communication terminal 10 determines whether the response time of the transmitted activation PDP context requesting message (namely, the counted response time) is within the predetermined time (step S24). Namely, when the counted response time is within the predetermined time, the mobile communication terminal 10 checks whether the activation PDP context authenticating message has been received. If the counted response time exceeds the predetermined time, the mobile communication terminal 10 re-transmits the activation PDP context requesting message.

Thereafter, the mobile communication terminal 10 checks whether the activation PDP context authenticating message has been received from the SGSN 30 (step S25). When the mobile communication terminal 10 has received the activation PDP context authenticating message, it sets the PDP context with the SGSN 30. If the mobile communication terminal 10 fails to receive the activation PDP context authenticating message, it determines again whether the counted response time is within the predetermined response time.

Accordingly, the mobile communication terminal 10 sets the PDP context (step S26). Then, the GPRS network and the existing Internet 50 are interconnected through the set PDP context, and the mobile communication terminal 10 can be used to perform data communications in the wireless communication network.

After the PDP context has been set, the mobile communication terminal 10 may transmit a de-activation PDP context requesting message to the SGSN 30 and then receives a de-activation PDP context authenticating message from the SGSN 30, thereby releasing the set PDP context.

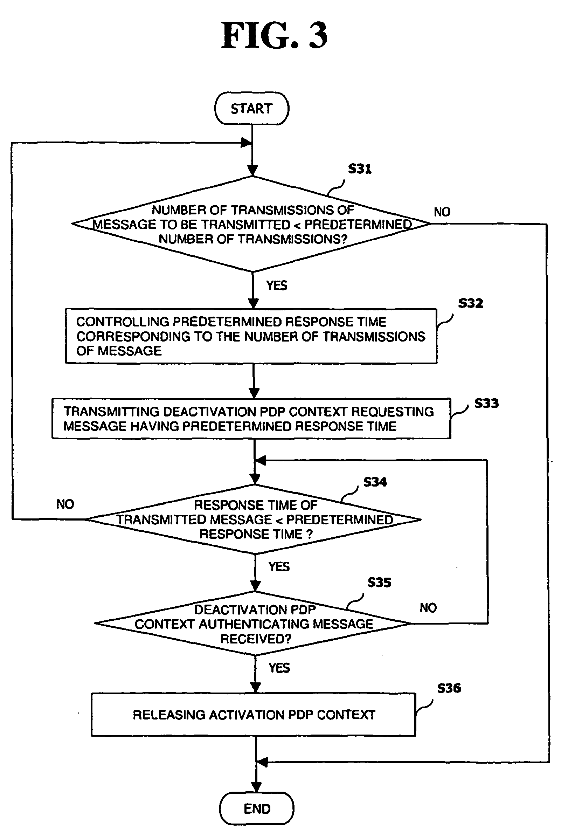

The method for releasing the PDP context of the mobile communication terminal will now be described with reference to FIG. 3.

FIG. 3 is a flow chart illustrating the processes of a method for releasing a PDP context of a mobile communication terminal in accordance with the present invention.

As shown in FIG. 3, the method for releasing the PDP context of the mobile communication terminal is similar to the method for setting the PDP context of the mobile communication terminal, detailed descriptions of which are thus omitted.

By determining a predetermined response time corresponding to the maximum number of transmissions of the deactivation PDP context requesting message, the mobile communication terminal 10 can control in a different manner, how the predetermined response time according to the number of transmissions of the deactivation PDP context requesting message should be set.

For example, when the mobile communication terminal 10 determines the maximum number of transmissions of the deactivation PDP context requesting message as five times, it can determine a response time of a first message for requesting the deactivation PDP context as 8 seconds like in the related art, a response time of a second message for re-requesting the deactivation PDP context as 5 seconds, a response time of a third message as 5 seconds, a response time of a fourth message as 3 seconds, and a response time of a fifth message as 3 seconds. That is, the mobile communication terminal 10 can control the response time of the message for requesting the re-transmitted deactivation PDP context differently according to the number of transmissions of the deactivation PDP context requesting message.

It can be clearly understood that the particular durations for the response time of each subsequent re-transmission may be varied depending upon the communication environment or other factors.

The present invention provides a method for handling a packet data protocol (PDP) context of a mobile communication terminal, the method comprising: flexibly assigning an appropriate authentication wait duration associated with each occasion of transmission of a request to activate or de-activate a PDP context; performing one or more transmissions of the request to activate or de-activate the PDP context, and checking whether authentication of the request is received within the authentication wait duration respectively assigned to that transmission occasion; and setting or releasing the PDP context when authentication of the request to activate or de-activate the PDP context is received.

Here, the appropriate authentication wait durations may be assigned according to conditions of a communication environment or other factors. Also, one or more appropriate authentication wait durations may be pre-set before a first transmission is performed. Additionally, the appropriate authentication wait duration may be determined whenever each transmission occasion is to be performed. Furthermore, the authentication wait duration for an initial transmission may be longer than that for a subsequent transmission.

As so far described, the method for setting and releasing the PDP context of the mobile communication terminal has such an advantage that the PDP context can be effectively set or released by controlling the predetermined response time with respect to the PDP context requesting message according to the number of re-transmissions of the PDP context requesting message.

The foregoing embodiments and advantages are merely exemplary and are not to be construed as limiting the present invention.

## Claims

1. A method for setting a packet data protocol, PDP, context, the method performed by a mobile communication terminal (10) and comprising:
- flexibly assigning, (S21, S22) a predetermined response waiting time based on the number of transmissions of a message for requesting activation of a PDP context, whereby each n-th transmission has an independent response waiting time;
- transmitting (S23) the request message according to the flexibly assigned predetermined response waiting time; and
- checking (S24, S25) whether a message for authenticating the PDP context activation is received within the predetermined response waiting time.

2. The method of claim 1, further comprising:
setting (S26) the PDP context when a message for authenticating the PDP context activation is received.

3. The method of claim 1 or 2, wherein the assigning step (S21, S22) comprises:
- checking (S21) whether the number of transmissions of the request message is smaller than a predetermined number of transmissions; and
- flexibly assigning (S22) the predetermined response waiting time according to the checked number of transmissions.

4. The method of claim 3, wherein the predetermined number of transmissions is not greater than 5 times.

5. The method of claim 4, wherein the predetermined response waiting time is reduced by a predetermined value as the number of transmissions increases.

6. The method of any one preceding claim, wherein the transmitting step (S23) comprises:
counting a response waiting time from the time point at which the request message is transmitted.

7. The method of any one preceding claim, wherein the checking step (S24, S25) comprises:
- determining (S24) whether a current response waiting time of the transmitted request message is within the predetermined response waiting time; and
- checking (S25) whether the authenticating message has been received when the current response waiting time of the transmitted request message is within the predetermined response waiting time.

8. The method of claim 7, wherein, in the determining step (S24), when the current response waiting time of the transmitted request message exceeds the predetermined response waiting time, the assigning step (S21, S22) is performed.

9. The method of claim 8, wherein, in the checking step, when the authenticating message is not received, the determining step (524) is performed.

10. The method of any one preceding claim, wherein the mobile communication terminal is one of a mobile phone, a Personal Digital Assistant, or a notebook computer.

11. A method for releasing a packet data protocol, PDP, context, the method performed by a mobile communication terminal (10) and comprising:
- flexibly assigning (S31, S32) a predetermined response waiting time based on the number of transmissions of a message for requesting deactivation of a PDP context, whereby each n-th transmission has an independent response waiting time;
- transmitting (S33) the request message according to the flexibly assigned predetermined response waiting time; and
- checking (S34, S35) whether a message for authenticating the PDP context deactivation is received within the predetermined response waiting time,

12. The method of claim 11, further comprising:
releasing (S36) the PDP context when a message for authenticating the PDP context deactivation is received.

13. The method of claim 11 or 12, wherein the assigning step (S31, S32) comprises:
- checking (S31) whether the number of transmissions of the request message is smaller than a predetermined number of transmissions; and
- flexibly assigning (S32) the predetermined response waiting time according to the checked number of transmissions.

14. The method of claim 13, wherein the predetermined number of transmissions is not greater than 5 times.

15. The method of claim 13 or 14, wherein the predetermined response waiting time is reduced by a predetermined value as the number of transmissions increases.

16. The method of any one of claims 11 to 15, wherein the transmitting step (S33) comprises:
counting a response waiting time from the time point at which the request message is transmitted.

17. The method of any one of claims 11 to 16, wherein the checking step (S34, S35) comprises:
- determining (S34) whether a current response waiting time of the transmitted request message is within the predetermined response waiting time; and
- checking (S35) whether the authenticating message has been received when the current response waiting time of the transmitted request message is within the predetermined response waiting time.

18. The method of claim 17, wherein, in the determining step, when the current response waiting time of the transmitted request message exceeds the predetermined response waiting time, the flexibly assigning step (S31, S32) is performed.

19. The method of claim 17 or 18, wherein, in the checking step, when the authenticating message is not received, the determined step (S34) is performed.

20. The method of any one of claims 11 to 19, wherein the mobile communication terminal is one of a mobile phone, a Personal Digital Assistant and a notebook computer.

## Patentansprüche

1. Verfahren zum Einrichten eines Kontexts eines Paketdatenprotokolls, kurz PDP, wobei das Verfahren von einem mobilen Kommunikationsendgerät (10) durchgeführt wird und umfasst:
- flexibles Zuweisen (S21, S22) einer vorbestimmten Antwortwartezeit basierend auf der Anzahl von Übermittlungen einer Nachricht zur Anforderung einer Aktivierung eines PDP-Kontexts, wobei jede n-te Übertragung eine unabhängige Antwortwartezeit besitzt,
- Übermitteln (S23) der Anforderungsnachricht nach Maßgabe der flexibel zugewiesenen vorbestimmten Antwortwartezeit, und
- Prüfen (S24, S25), ob eine Nachricht zur Authentifzierung der PDP-Kontextaktivierung innerhalb der vorbestimmten Antwortwartezeit empfangen wird.

2. Verfahren nach Anspruch 1, ferner umfassend:
- Einrichten (S26) des PDP-Kontexts, sobald eine Nachricht zur Authentifizierung der PDP-Kontextaktivierung empfangen wird.

3. Verfahren nach Anspruch 1 oder 2, wobei der Zuweisungsschritt (S21, S22) umfasst:
- Prüfen (S21), ob die Anzahl der Übermittlungen der Anforderungsnachricht kleiner als eine vorbestimmte Anzahl von Übermittlungen ist, und
- flexibles Zuweisen (S22) der vorbestimmten Antwortwartezeit nach Maßgabe der geprüften Anzahl von Übermittlungen.

4. Verfahren nach Anspruch 3, wobei die vorbestimmte Anzahl von Übermittlungen nicht größer als 5 ist.

5. Verfahren nach Anspruch 4, wobei die vorbestimmte Antwortwartezeit mit größer werdender Anzahl von Übermittlungen um einen vorbestimmten Wert verkleinert wird.

6. Verfahren nach einem der vorhergehenden Ansprüche, wobei der Übermittlungsschritt (S23) umfasst:
Zählen einer Antwortwartezeit ab dem Zeitpunkt, zu dem die Anforderungsnachricht übermittelt wird.

7. Verfahren nach einem der vorhergehenden Ansprüche, wobei der Prüfschritt (524, S25) umfasst:
- Ermitteln (S24), ob eine gegenwärtige Antwortwartezeit der übermittelten Anforderungsnachricht innerhalb der vorbestimmten Antwortwartezeit liegt, und
- Prüfen (525), ob die Authentifizierungsnachricht empfangen wurde, falls die gegenwärtige Antwortwartezeit der übermittelten Anforderungsnachricht noch innerhalb der vorbestimmten Antwortwartezeit liegt.

8. Verfahren nach Anspruch 7, wobei bei dem Ermittlungsschritt (S24) der Zuweisungsschritt (S21, S22) durchgeführt wird, falls die gegenwärtige Antwortwartezeit der übermittelten Anforderungsnachricht die vorbestimmte Antwortwartezeit übersteigt.

9. Verfahren nach Anspruch 8, wobei bei dem Prüfschritt der Ermittlungsschritt (S24) durchgeführt wird, wenn keine Authentifizierungsnachricht empfangen wird.

10. Verfahren nach einem der vorhergehenden Ansprüche, wobei das mobile Kommunikationsendgerät ein Mobiltelefon, ein persönlicher digitaler Assistent oder ein Notebook-Computer ist.

11. Verfahren zum Freigeben eines Kontexts eines Paketdatenprotokolls, kurz PDP, wobei das Verfahren von einem mobilen Kommunikationsendgerät (10) durchgeführt wird und umfasst:
- flexibles Zuweisen (S31, S32) einer vorbestimmten Antwortwartezeit basierend auf der Anzahl von Übermittlungen einer Nachricht zur Anforderung einer Deaktivierung eines PDP-Kontexts, wobei jede n-te Übermittlung eine unabhängige Antwortwartezeit besitzt,
- Übermitteln (S33) der Anforderungsnachricht nach Maßgabe der flexibel zugewiesenen vorbestimmten Antwortwartezeit und
- Prüfen (S34, S35), ob eine Nachricht zur Authentifizierung der PDP-Kontextdeaktivierung innerhalb der vorbestimmten Antwortwartezeit empfangen wird.

12. Verfahren nach Anspruch 11, ferner umfassend:
Freigeben (S36) des PDP-Kontexts, sobald eine Nachricht zur Authentifizierung der PDP-Kontextdeaktivierung empfangen wird.

13. Verfahren nach Anspruch 11 oder 12, wobei der Zuweisungsschritt (S31, S32) umfasst:
- Prüfen (S31), ob die Anzahl der Übermittlungen der Anforderungsnachricht kleiner als eine vorbestimmte Anzahl von Übermittlungen ist, und
- flexibles Zuweisen (S32) der vorbestimmten Antwortwartezeit nach Maßgabe der geprüften Anzahl von Übermittlungen.

14. Verfahren nach Anspruch 13, wobei die vorbestimmte Anzahl von Übermittlungen nicht größer als 5 ist.

15. Verfahren nach Anspruch 13 oder 14, wobei die vorbestimmte Antwortwartezeit mit zunehmender Anzahl von Übermittlungen um einen vorbestimmten Wert verkleinert wird.

16. Verfahren nach einem der Ansprüche 11 bis 15, wobei der Übermittlungsschritt (S33) umfasst:
Zählen einer Antwortwartezeit ab dem Zeitpunkt, zu dem die Anforderungsnachricht übermittelt wird.

17. Verfahren nach einem der Ansprüche 11 bis 16, wobei der Prüfschritt (S34, S35) umfasst:
- Ermitteln (S34), ob eine gegenwärtige Antwortwartezeit der übermittelten Anforderungsnachricht innerhalb der vorbestimmten Antwortwartezeit liegt, und
- Prüfen (S35), ob die Authentifizierungsnachricht empfangen wurde, falls die gegenwärtige Antwortwartezeit der übermittelten Anforderungsnachricht noch innerhalb der vorbestimmten Antwortwartezeit liegt.

18. Verfahren nach Anspruch 17, wobei bei dem Ermittlungsschritt der Schritt des flexiblen Zuweisens (S31, S32) durchgeführt wird, falls die gegenwärtige Antwortwartezeit der übermittelten Anforderungsnachricht die vorbestimmte Antwortwartezeit übersteigt.

19. Verfahren nach Anspruch 17 oder 18, wobei bei dem Prüfschritt der Ermittlungsschritt (S34) durchgeführt wird, falls keine Authentifizierungsnachricht empfangen wird.

20. Verfahren nach einem der Ansprüche 11 bis 19, wobei das mobile Kommunikationsendgerät ein Mobiltelefon, ein persönlicher digitaler Assistent oder ein Notebook-Computer ist.

## Revendications

1. Procédé de définition d'un contexte de protocole de commutation de paquets, PDP, le procédé mis en oeuvre par un terminal de communication mobile (10) et comprenant :
- l'attribution flexible (S21, S22) d'un temps d'attente de réponse prédéterminé sur la base du nombre de transmissions d'un message pour demander l'activation d'un contexte de PDP, dans lequel chaque n^{ème} transmission a un temps d'attente de réponse indépendant ;
- la transmission (S23) du message de demande en fonction du temps d'attente de réponse prédéterminé attribué de façon flexible ; et
- le contrôle (S24, S25) qu'un message pour l'authentification de l'activation du contexte de PDP est reçu ou non à l'intérieur du temps d'attente de réponse prédéterminé.

2. Procédé selon la revendication 1, comprenant en outre :
la définition (S26) du contexte de PDP lorsqu'un message pour l'authentification de l'activation du contexte de PDP est reçu.

3. Procédé selon la revendication 1 ou 2, dans lequel l'étape d'attribution (S21, S22) comprend :
- le contrôle (S21) que le nombre de transmissions du message de demande est ou non plus petit qu'un nombre prédéterminé de transmissions ; et
- l'attribution flexible (S22) du temps d'attente de réponse prédéterminé en fonction du nombre contrôlé de transmissions.

4. Procédé selon la revendication 3, dans lequel le nombre prédéterminé de transmissions n'est pas supérieur à 5 fois.

5. Procédé selon la revendication 4, dans lequel le temps d'attente de réponse prédéterminé est diminué d'une valeur prédéterminée lorsque le nombre de transmissions augmente.

6. Procédé selon une quelconque revendication précédente, dans lequel l'étape de transmission (S23) comprend :
le décompte d'un temps d'attente de réponse à partir du point dans le temps auquel le message de demande est transmis.

7. Procédé selon une quelconque revendication précédente, dans lequel l'étape de contrôle (S24, S25) comprend :
- la détermination (S24) qu'un temps d'attente de réponse actuel du message de demande transmis est ou non à l'intérieur du temps d'attente de réponse prédéterminé ; et
- le contrôle (S25) que le message d'authentification a été ou non reçu lorsque le temps d'attente de réponse actuel du message de demande transmis est à l'intérieur du temps d'attente de réponse prédéterminé.

8. Procédé selon la revendication 7, dans lequel, dans l'étape de détermination (S24), lorsque le temps d'attente de réponse actuel du message de demande transmis excède le temps d'attente de réponse prédéterminé, l'étape d'attribution (S21, S22) est mise en oeuvre.

9. Procédé selon la revendication 8, dans lequel, dans l'étape de contrôle, lorsque le message d'authentification n'est pas reçu, l'étape de détermination (S24) est mise en oeuvre.

10. Procédé selon une quelconque revendication précédente, dans lequel le terminal de communication mobile est l'un d'un téléphone mobile, d'un assistant numérique personnel ou d'un ordinateur portable.

11. Procédé de libération d'un contexte de protocole de commutation de paquets, PDP, le procédé mis en oeuvre par un terminal de communication mobile (10) et comprenant :
- l'attribution flexible (S31, S32) d'un temps d'attente de réponse prédéterminé sur la base du nombre de transmissions d'un message pour demander la désactivation d'un contexte de PDP, dans lequel chaque n^{ème} transmission a un temps d'attente de réponse indépendant ;
- la transmission (S33) du message de demande en fonction du temps d'attente de réponse prédéterminé attribué de façon flexible ; et
- le contrôle (S34, S35) qu'un message pour l'authentification de la désactivation du contexte de PDP est reçu ou non à l'intérieur du temps d'attente de réponse prédéterminé.

12. Procédé selon la revendication 11, comprenant en outre :
la libération (S36) du contexte de PDP lorsqu'un message pour l'authentification de la désactivation du contexte de PDP est reçu.

13. Procédé selon la revendication 11 ou 12, dans lequel l'étape d'attribution (S31, S32) comprend :
- le contrôle (S31) que le nombre de transmissions du message de demande est ou non plus petit qu'un nombre prédéterminé de transmissions ; et
- l'attribution flexible (S32) du temps d'attente de réponse prédéterminé en fonction du nombre contrôlé de transmissions.

14. Procédé selon la revendication 13, dans lequel le nombre prédéterminé de transmissions n'est pas supérieur à 5 fois.

15. Procédé selon la revendication 13 ou 14, dans lequel le temps d'attente de réponse prédéterminé est diminué d'une valeur prédéterminée lorsque le nombre de transmissions augmente.

16. Procédé selon l'une quelconque des revendications 11 à 15, dans lequel l'étape de transmission (S33) comprend :
le décompte d'un temps d'attente de réponse à partir du point dans le temps auquel le message de demande est transmis.

17. Procédé selon l'une quelconque des revendications 11 à 16, dans lequel l'étape de contrôle (S34, S35) comprend :
- la détermination (S34) qu'un temps d'attente de réponse actuel du message de demande transmis est ou non à l'intérieur du temps d'attente de réponse prédéterminé ; et
- le contrôle (S35) que le message d'authentification a été ou non reçu lorsque le temps d'attente de réponse actuel du message de demande transmis est à l'intérieur du temps d'attente de réponse prédéterminé.

18. Procédé selon la revendication 17, dans lequel, dans l'étape de détermination, lorsque le temps d'attente de réponse actuel du message de demande transmis excède le temps d'attente de réponse prédéterminé, l'étape d'attribution flexible (S31, S32) est mise en oeuvre.

19. Procédé selon la revendication 17 ou 18, dans lequel, dans l'étape de contrôle, lorsque le message d'authentification n'est pas reçu, l'étape de détermination (S34) est mise en oeuvre.

20. Procédé selon l'une quelconque des revendications 11 à 19, dans lequel le terminal de communication mobile est l'un d'un téléphone mobile, d'un assistant numérique personnel et d'un ordinateur portable.
